# EUROPEAN PATENT APPLICATION

(11) **EP 0 870 704 A1**
(43) Date of publication of application: **14.10.1998**
(21) Application number: 98106244.1
(22) Date of filing: 06.04.1998
(51) Int. Cl.: B65G 59/06, B65G 1/137

(54) **Automatic distributor of stacked packages**

(30) Priority: 09.04.1997 IT BO970214
(71) Applicant: Overtec S.r.l., 42043 Gattatico (Emilia) (IT)
(72) Inventor: Tattoli, Giovanni, 43100 Parma (IT)
(74) Representative: Dall'Olio, Giancarlo

(57) **Abstract**

An automatic distributor of stacked packages includes two lines of vertical channels, inclined inwards and formed by pairs of walls, arranged side by side. The channels are discharged to the inside of the distributor, over a conveyor which collects the packages (11) and brings them to an end of the distributor. An ejector group (33), situated at the base of each channel, is formed by an outer support (34) with a guide (36) made therein for a slide (37). The slide features a crosswise slot (38). A motor (39) is connected with two cogwheels (41,42), on which a chain (44) is mounted. A pin (45) fastened to the chain (44) is inserted in the groove (38) of the slide (37). Thus, operation of the motor (39) determines alternative movement of a pusher (48) fastened to the slide (37). The base of each stacking channel is partially closed by lateral extensions of a widened base of a shaped elements (14) fastened to the bottom of the walls.

## Description

The present invention relates to automatic distributors for packages which are stacked in magazines. In particular, the invention concerns a distributor useful in automation of packages distribution or in important retail sale.

In the currently known distributors, the packages are stacked vertically inside channels situated along parallel lines, between which one or more conveying belts operate.

Ejector means, operated singularly or all together, ejects the lowermost articles to be delivered to shops, which fall onto the conveying belt. Then the articles ejected are taken to the distributor head where a gathering container has been previously positioned.

The European Patent Application published under the number EP-A-0 383 000 describes such a distributor comprising a modular magazine formed by a longitudinal cross-piece provided with equidistant joints designed to hold vertical walls, that define the packages width.

The bottom of each magazine is equipped with an ejector, operated to expel the lowermost package of the relative stack.

The ejectors are operated by a single cam mechanism, situated in the region of the distributor end and acting on a bar extending longitudinally along the modular magazine.

Other similar distributors are described in the patents: EP-A-0.037.989, DE-C-1.001.813, EP-A-0.192.206, FR-A-2.248.217 and US-A-3.631.992.

Generally, the above mentioned distributors present various disadvantages as far as construction, operation, package size change, maintenance are concerned, and moreover, their dimensions are enormous.

These disadvantages derive mainly from constructive characteristics and from the position of driving means, as well as from the assembly, adjustment, size change over and maintenance operations, which are complicated and expensive.

Another distributor of the above mentioned type is described in the European Publication no. EP-A-0.611.265. This distributor includes two lines of vertical channels for stacking packages, facing each other and inclined so that they converge upwards, ejectors of single packages and operation means for these ejectors.

The vertical channels outlets face the inside of the distributor, where a conveyor is situated for transporting the expelled packages toward the distributor end.

The ejectors include bars driven to slide crosswise with reference to the longitudinal axis of the distributor by a common system operated by a cam mechanism situated in the region of the distributor end.

Retaining elements, formed by a series of permanent magnets, keeps the ejectors stopped, while actuators, formed by electromagnets, bring the ejectors to operative state.

Although this distributor overcome many of the disadvantages of the previously described apparatuses, the ejectors are held with little stability.

In practice, structure vibrations, sometimes strong, can cause one or more ejectors to be released, thus provoking inopportune exit of one or more packages.

Another disadvantage derives from the fact that the driving bars of the ejectors are considerably long, and since they must be moved crosswise with high speed, they are subject to considerable bending, if they are not suitably guided.

This results in considerable constructive complexity and increase of vibration, which, as has been already said, determine undesirable effects on the ejectors.

Furthermore, the driving bars are subjected to so many and so strong bending stresses that they must be frequently substituted.

Finally, a further disadvantage of this last distributor derives from the additional length necessary for the bars driving system, in the region of the apparatus end.

An object of the present invention is to overcome the above mentioned disadvantages by proposing a distributor of the same type improved in such a way that the packages are released from the magazines in a correct way, without undesired movements of the ejectors and excessive stresses or bending.

Another object of the present invention is to propose improvements to the previously described distributor, that reduce those spaces which cannot be used for storing articles to be delivered.

The advantages obtained with the present invention derive substantially from the fact the means driving the packages ejectors are separate for each magazine and therefore, they do not need driving systems situated in the region of the distributor end, or transmission means as long as the whole device, which eliminates undesirable oscillations.

The driving means of each magazine are reliable, simple in construction and easily adaptable to different sizes of the packages to deliver.

Other characteristic features and advantages of the present invention will be better understood from the following detailed description of the preferred embodiment, as a pure, not limitative example, and with reference to the enclosed drawings, in which:
- Figure 1 is a schematic overall front view of the distributor;
- Figure 2 is an enlarged view of particular A of Figure 1, including the ejecting area;
- Figure 3 is a schematic partial lateral view of the distributor;
- Figure 4 is a section view taken along line IV-IV of Figure 3;
- Figures 5 and 6 are front and lateral views of a particular of Figure 3;
- Figure 7 is a view of an ejector group adapted to the present distributor, while
- Figure 8 is a section view of the same ejector group taken along line VIII-VIII of Figure 7.

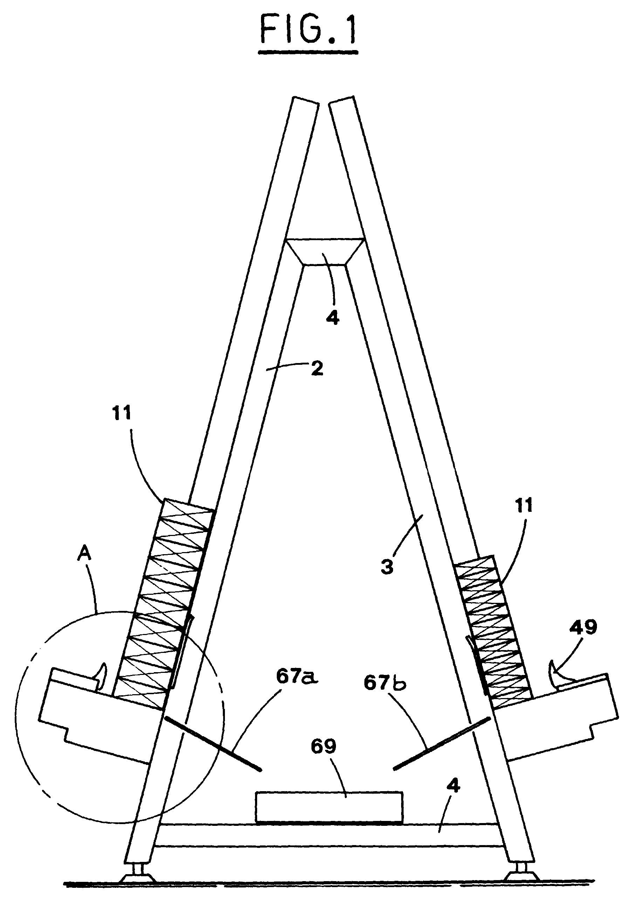

With reference to Figure 1, the distributor 1 consists of a pyramidal structure, substantially symmetrical to a vertical plane, as known in the field.

Vertical magazines, or stacking channels, situated on two opposite sides, are aligned along the structure longitudinal extension and are convergent upwardly.

The stacking channels lean, according to known configurations, against a series of tubular parallel longitudinal beams 5, placed at different heights, not seen in Figure 1, which connect in the longitudinal direction a series of inclined columns 2, 3 of the structure, joined at the base and at the top by cross-bars 4.

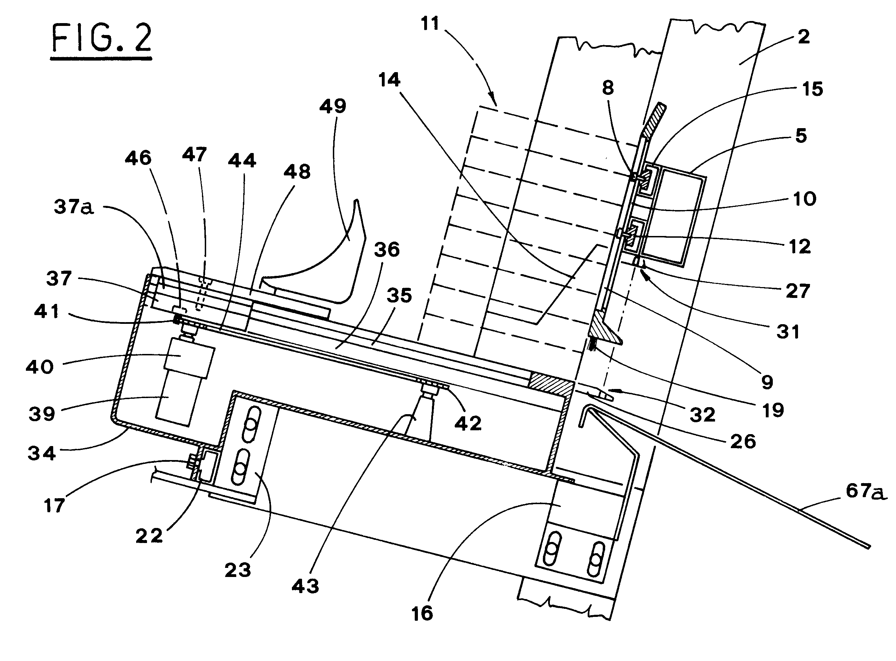

A cross-section of one of the longitudinal beams 5 is illustrated in Figure 2.

Each of the longitudinal beams 5 has one or two 〈〈C〉〉-like sections 15 turned outwards with respect to the structure.

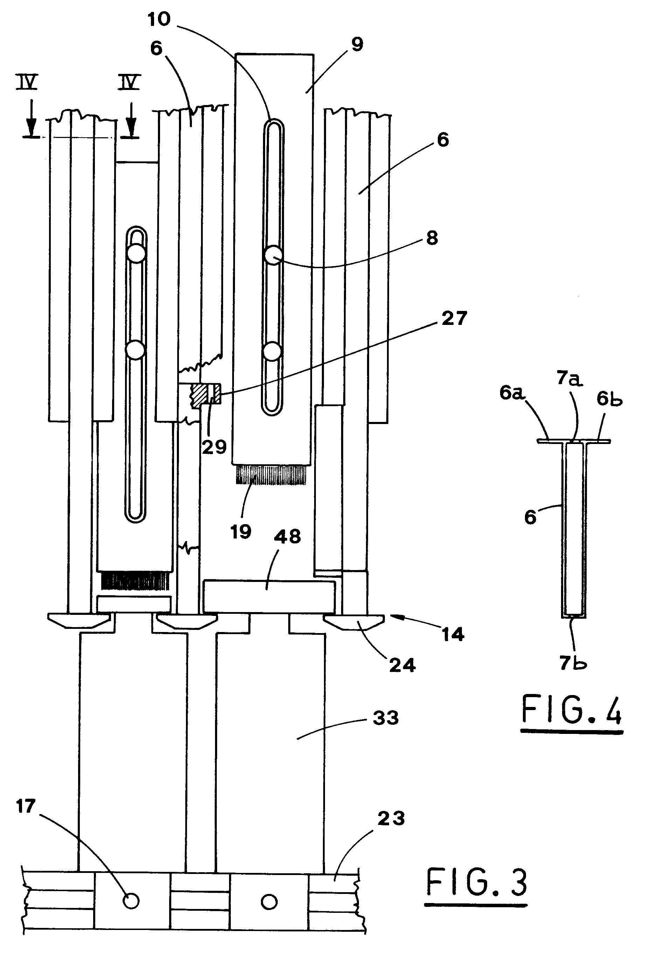

The stacking channels are formed by a series of vertical walls 6, see in particular Figures 3 and 4. The walls are rectangular in shape with a plane applied transversely in the region of a head. The two wings 6a,6b protrude in opposite directions from one of the smaller sides (Figure 4), so that the wall 6 takes a 〈〈T〉〉 shape.

According to a known technique, the walls 6 are placed, with the wings 6a,6b coplanar and resting against the longitudinal beams 5. The walls are fastened to the beams by screws, not shown, which pass through their bigger crosswise extension.

For this purpose, passing holes 7a,7b are made in the smaller sides of the walls 6.

The screws engage with suitably perforated and threaded blocks sliding inside the 〈〈C〉〉-like sections.

In this way, a vertical channel, for stacking packages 11 therein, is formed between two adjacent walls 6, slightly inclined toward the inside of the distributor.

The side of the channel 11 that is turned toward the distributor inside, is defined by two wings 6a,6b of the two walls 6, while the other lateral parts of the same channel are defined by the longer sides of two counter-facing walls 6.

Due to this structure, the stacking channel can be adapted to packages of different width by moving away or closer the walls 6, which can slide longitudinally to the distributor along the longitudinal beams 5.

Different channels can have different widths, so as to stack packages of different sizes.

Figure 3 illustrates such an arrangement of the three walls 6 that the channels defined therebetween have different widths, e.g. the channel on the right is 1.5 times wider than the one on the left.

As seen in Figure 3, before reaching the base of the walls 6, the plane formed by the wings 6a,6b is interrupted, by means of e.g. cutting or machining, so as to leave free space at the bottom of the stacking channels for the lowermost article to exit.

As seen in Figure 2, plates 9 with slots made therein, are fastened to the longitudinal beam 5.

The plates 9 are designed to define variable height of the free area for the packages to be ejected.

The lower edge of each plate 9 is equipped with a brush, whose function will be explained later.

The slots 10 are shaped in such a way as to allow the screws 8, used to fasten the plates to the 〈〈C〉〉-like sections, to sink, so as not to hinder vertical downward movement of the packages 11 stored in the stacking channels.

The screws 8 engage the blocks 12 suitably perforated and threaded, sliding inside the 〈〈C〉〉-like sections, as seen in Figure 2.

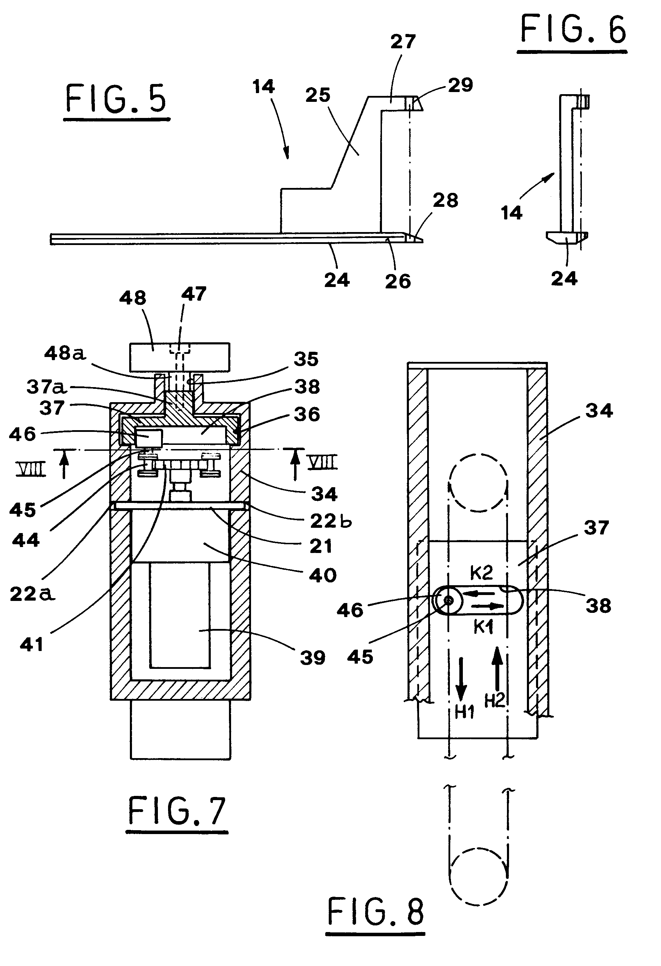

A shaped element 14, fastened, by known means, e.g. not illustrated screws, to the lower part of each wall 6, is made of e.g. moulded plastic or die-cast metal material, shown in detail in Figures 5 and 6 and also in the Figures 2 and 3 in the assembling position.

This shaped element 14 defines the bottom of each stacking channel.

The bottom element 14 includes a base 24 of elongated shape, from which a narrower vertical baffle 25 protrudes, situated close to one of the base extremities and designed to be introduced inside the bottom of a corresponding wall 6.

The baffle 25 features two protrusions 26 and 27, one of which, indicated with 26 in Figure 5, is situated at the level of the base 24, and the other one, indicated with 27, is situated at the top of the baffle 25.

Both protrusions extend laterally and in opposite direction with respect to the free end part of the base 24, as well seen in Figures 5 and 6, thus forming a fork.

According to Figures 5 and 6, the protrusion 28 made in the region of the base 24 is part of this base 24, but it is obvious that it can be made separately therefrom.

The two protrusions feature passing holes 28,29 defining seats for receiving a signal emitter 31 and signal receiver 32, e.g. luminous, infrared, o simply a luminous source and a photocell.

The task of these two elements, as appears obvious from their position shown in Figure 2, is to detect the passage of the packages while being dispensed from the stacking channel.

The base 24 feature two opposite flanges. Each of the flange of the base 24, together with a flange of a bottom element 14 nearby, defines a support surface for the bottom of the packages 11 stacked in the channel.

This support surface is not continuous but is open along a medium area, for the purpose better explained later.

A pair of tubular longitudinal bars 16,23 is situated below each series of longitudinal beams 5.

These tubular longitudinal bars 16,23 are arranged on a plane perpendicular to the columns 2,3, and the outer bar 23, with respect to the structure, is provided with at least one 〈〈C〉〉-like section bar 22 turned outward.

Ejector groups 33, whose number is at least equal to the number of the stacking channels, are fastened to the outer bar 23 by known means, as screws 17, which engage perforated and threaded blocks sliding inside the 〈〈C〉〉-like section bar 22.

The inner ends of the ejector groups 33 rest against the inner bar 16.

Each ejector group 33, seen in detail in Figures 7 and 8, is made as a modular unit and is mounted inside an outer case 34 with an opening 35 made on the top of this latter.

The longitudinal extension of the opening 35 is almost equal to the longitudinal extension of the case 34.

The uppermost part of the inner surface of the case 34 features a widened seat 36 defining a longitudinal guide for a slide 37, formed by a substantially parallelepiped body, which thus can move longitudinally along the case in two opposite directions H1 and H2 (Figure 8).

Obviously, the body forming the slide can be of any shape, and not only parallelepiped.

The upper part of the slide 37 has a vertical extension 37a which slidingly enters the opening 35 of the case 34.

The lower part of the slide 37 has a transversal groove 38, whose function will be explained later.

A motor 39, possibly equipped with a gear speed reducer 40, is situated near a longitudinal end of the case 34.

The motor is supported by an oblong plate 21, which is fastened to the upper head of the motor 39 and is introduced with the opposite ends into two horizontal slots 22a,22b made in the inner walls of the case 34.

In this way it is possible to adjust the motor horizontal position acting thereon with screw means, not shown.

The outlet axis of the gearmotor group 39-40 is vertical and supports, keyed thereon a first cogwheel 41, linked by a chain 44, to a second cogwheel 42.

The second cogwheel 42 is carried by a vertical support 43 near the other longitudinal end of the case 34.

Obviously, the chain can be substituted with a belt, while the cogwheels are replaced with corresponding pulleys.

A pin 45, fastened to the chain 44, carries an idle roller 46, which can rotate about a vertical axis.

The roller 46 is introduced into the transversal groove 38.

Activation of the motor 39 determines rotation of the chain 44 which pulls the slide 37 along the widened seat 36, e.g. in direction H1 (Figure 8).

When the pin 45 with the roller 46 reaches the area of the chain 44 turn, i.e. in the region of the second cogwheel 42, the change of direction of the pin 45 causes the roller 46 slided inside the transversal groove 38 in direction K1.

Therefore, the pin and the roller follow the opposite trajectory, moving the slide 37 in direction H2 up to the other turn point of the chain, in the region of the first cogwheel 41, where the roller moves in the opposite direction K2.

A pusher segment 48, fastened to the vertical extension 37a of the slide 37 by e.g. a screw 47, has a vertical extension 48a turned downward and introduced inside the opening 35, so as to rest against the vertical extension 37a of the slide 37.

The ejector groups 33 are mounted in the region of the stacking channels with the flanges of the bases 24 of the bottom elements 14, arranged side by side, introduced in the narrow area of the case 34, delimited between the pusher segment 48 and the parallelepiped block 37, i.e. in the region of the opening 35.

Two stop elements 49 are fastened to the case 34 in the area designed to remain outer with respect to the stacking channel.

The two stop elements 49 are adjustable longitudinally with respect to the same case, i.e. with respect to the pusher segment 48 movement direction. As it will be seen later, the blocking elements are aimed at preventing the packages 11 from going out of the channel during the pusher segment 48 return movement.

With reference to Figures 1 and 2, for each line of stacking channels, a slope slide member 67a,67b, possibly resting against the inner bar 23, is provided near the mouth of the stacking channels dispensing packages 11, at the level slightly lower than the lower ejection plane defined by the bases of the bottom elements 14.

This slope slide member 67a,67b is designed to send the dispensed packages toward the conveyor 69 that transports the packages from the inside of the distributor to a collecting area situated at one end of the distributor.

First the packages 11 are loaded in the stacking channels.

Due to the inclination toward the inside of the structure, the closing back walls are useless, and thus the loading operations become much easier.

The height of the plates 9, seen in Figure 3, is adjusted for each stacking channel, thus determining the height of the release mouth of each single stack of packages 11.

The brush 19 must be situated at a level a bit lower than the height of a respective package, so as to keep the last package in the channel, in normal conditions, but without preventing it from being dispensed.

The size of the segments 48 to be mounted corresponds to the size of the package to be dispensed, as shown in a way of example, not limitative, in Figure 3.

If the height of packages is bigger than the biggest size of the segments 48, it is possible to provide two or more segments, stacked one over another, as well as it is possible to provide two or more ejector groups 33 in the region of only one stacking channel, if the packages are too wide.

Different ejector groups 33 are controlled by a computerised control unit, not shown as of known type, which commands the sequence and the number of interventions of different groups 33 in relation to the orders received by the keyboard or by other data input means, as magnetic discs, data transmission networks, etc.

Extraction is operated substantially by activation of the motor 39 for a time sufficient for the chain 44 to make a complete turn.

In this way, the pusher segment 48 moves toward the structure inside, dispensing a package 11 from the bottom of the stack.

When going out, the package folds the brush 19, while the plate 9 prevents other packages, situated over, from being pulled and ejected.

As soon as the package 11 has been dispensed, the pile of packages lowers until it rests against the pusher segment 48.

During the return stroke of the pusher segment 48, the stop element 49, suitably positioned, prevents the package previously positioned over the one just dispensed, from being back ejected.

The conveyor 69 is always powered up, so as to collect the packages brought thereto by the slope slide members 67a and 67b and transport them to the collection point, where they are picked up or introduced into suitable containers.

During ejection, each package passes through the two arms of the fork formed by the protrusions 26 and 27, cutting off the luminous beam between the source of light 31 and the photocell 32, thus determining counting updating and checking of the packages correct ejection.

If 〈〈n〉〉 packages of the same pile must be expelled consecutively, the motor will be kept activated for the time necessary for the chain 44 to perform 〈〈n〉〉 complete turns.

The completion of each turn of the chain is checked by suitable known detecting means, e.g. a pulse switch, that is activated each time an element fastened to the chain 44 passes nearby, or by sending a determined number of impulses to the motor 39, which in this case is a step motor.

It is obvious how all the objects of the present invention have been achieved.

The described distributor dispenses packages from the stacking channels in an always correct way, and the ejector means do not perform movements which could cause undesirable stresses and excessive vibrations leading to machine wrong operation or blocking.

Moreover, the previously described distributor can reduce the spaces, in which the products to be distributed cannot be stacked, because there are no common operating means for the ejector groups, situated in the end regions.

In particular, there are independent packages ejection means for each magazine, therefore they do not need power means situated at the distributor heads, or driving means as long as the whole apparatus, what results in eliminating undesirable oscillation.

Moreover, the power means of each magazine operate in a reliable way, can be easily substituted and adapted to different sizes of the packages to be distributed.

It is to be pointed out that the ejector groups are very simple and rapid to be replaced by removing the screw 17 and extracting the modular unit.

Therefore, it is not necessary to disassemble other parts of the machine, or remove the packages stacked in the channels, thus the substitution operation or preparing a new productive cycle are very quick.

Obviously, it is possible to provide more levels of ejector group lines arranged one over another, with each line acting on a corresponding line of suitably positioned stacking channels, according to known configurations.

## Claims

1. An automatic package distributor including parallel lines of packages stacking vertical channels, ejector means mounted at the bottom of respective stacking channels for dispensing at least one single package from respective stacks of packages, conveying means for transporting dispensed packages to a collecting area, characterised in that said ejector means include:
a support (34) provided with a longitudinal guide (36);
a slide (37) moved in opposite directions (H1,H2) along said longitudinal guide (36) and featuring, on its surface, a groove (38) transversal to its movement direction;
a motor (39) situated, with its output shaft vertical and carrying a first cogwheel (41), located in the region of one end of said support (34);
a second cogwheel (42) carried with vertical rotation axis, in the region of the other end of said support (34);
a chain (44), mounted on said first and second cogwheels (41,42) and carrying a pin (45) sliding inside said transversal groove (38) of said slide (37);
a pusher segment (47) fastened to said slide (37), in a manner and in a position such as to be situated in the region of the bottom of a respective stacking channel for pushing a head of the lowermost package (11) contained therein due to the activation of said motor (39).

2. A distributor, according to claim 1, characterised in that said support (34) includes an outer case (34) with a longitudinal opening (35) made on its top, through which passes a vertical extension (37a) of said slide (37) connected with said pusher segment (48).

3. A distributor, according to claim 2, characterised in that the cases (34) of said ejector groups (33) are brought to rest against longitudinal bars (16,23) fastened horizontally to a structure (2,3) supporting said stacking channels, so as to be situated below a respective stacking channel, said cases (34) being removably fastened to at least one longitudinal bar (16,23).

4. A distributor, according to claim 2, characterised in that said pusher (48) has a vertical extension (48a) which enters said longitudinal opening (35) of said outer case (34) resting on said slide (37).

5. A distributor, according to claim 1, characterised in that said slide (37) has a parallelepiped form.

6. A distributor, according to claim 1, characterised in that said guide means (36) include a widened seat (36) made in the uppermost part of the inner surface of the case (34).

7. A distributor, according to claim 1, characterised in that said pin (45) carries a rotating roller (46), which enters said transversal groove (38) of the slide (37).

8. A distributor, according to claim 1, characterised in that each stacking channel is laterally defined by pairs of walls (6), with a shaped element (14) fastened to the lower part thereof, so as to form the bottom of each stacking channel.

9. A distributor, according to claim 8, characterised in that said bottom element (14) includes an elongated flanged base (24), from which a narrower vertical baffle (25) protrudes, situated close to one end of said base (24) and designed to be introduced into the bottom portion of a corresponding wall (6).

10. A distributor, according to claim 9, characterised in that said bottom element (14) includes two protrusions (26,27) situated on the part opposite to the free extension of the base (24) without the baffle (25), respectively at the level of the base (24) and the top of the baffle (25), and in that said protrusions extend from the part opposite to the free part of the base (24) and laterally to form a fork.

11. A distributor, according to claim 10, characterized in that the protrusion (28) situated at the level of the base (24) includes a part of the same base (24).

12. A distributor, according to claim 10, characterised in that said protrusions (26,27) have corresponding through holes (28,29) defining seats for receiving a signal emitter (31) and signal receiver (32), which detect the passage of the packages (11) between the arms of said fork, when these packages are withdrawn from the respective stacking channel.

13. A distributor, according to claim 1, characterised in that it includes two lines of stacking channels inclined and convergent upwards with conveying means, formed by a conveyor (69) and situated between said converging lines.

14. A distributor, according to claim 8, characterised in that said walls (6) have rectangular section and two wings (6a,6b) protruding outwards from one of their smaller sides, said walls (6) resting against longitudinal beams (5), so that the wings (6a,6b) of adjacent walls (6) are coplanar for defining an inner containing plane for the stacked packages (11).

15. A distributor, according to claim 14, characterised in that said wings (6a,6b) are terminated close to the bottom of said walls (6), so as to leave free space in the lower part of each stacking channel to allow the lowermost package (11) to go out therefrom.

16. A distributor, according to claim 15, characterised in that it includes slotted plates (9) situated in the region of said free space and fastened to one of said longitudinal beams, each of these plates being aimed at variably defining the effective height of the free space for the packages ejection.

17. A distributor, according to claim 16, characterised in that the lower edge of each plate (9) is equipped with a brush (19) for keeping the last package (11) remained inside the stacking channel without preventing it from being dispensed.

18. A distributor, according to claim 1, characterised in that it includes slope slide members (67a,67b) leading toward said conveying means (69).

19. A distributor, according to claim 1, characterised in that it provides a pulse switch activated by the passage of an element fastened to the chain (44), so as to detect each complete turn of the same chain (44).
